# EUROPEAN PATENT SPECIFICATION

(11) **EP 2 104 419 B1**
(45) Date of publication and mention of the grant of the patent: **25.02.2015**
(21) Application number: 07860894.0
(22) Date of filing: 28.12.2007
(51) Int. Cl.: A01M 7/00

(54) **SPRAYING DEVICE**
SPRITZVORRICHTUNG
DISPOSITIF DE PULVÉRISATION

(30) Priority: 19.01.2007 NL 1033257
(43) Date of publication of application: 30.09.2009
(73) Proprietor: Van Den Munckhof, Mathijs Rene Maria Jozef, 5961 CV Horst (NL); Van Den Munckhof, Pieter Jozef Marie, 5961 CV Horst (NL)
(72) Inventor: Van Den Munckhof, Mathijs Rene Maria Jozef, 5961 CV Horst (NL); Van Den Munckhof, Pieter Jozef Marie, 5961 CV Horst (NL)
(74) Representative: Klavers, Cornelis
(86) International application number: PCT/NL2007/000331
(87) International publication number: WO 2008/088208

(56) References cited:
- EP-A1- 0 272 740
- EP-A1- 0 878 127
- US-A- 5 522 544
- US-B1- 6 302 332

## Description

The present invention relates to a device for spraying crops, comprising: a frame provided with at least one inflatable air chamber which is provided with a number of outlet openings that extend substantially parallel to the longitudinal direction of the air chamber, and with at least one source of air connected to the air chamber for creating an overpressure in the air chamber in comparison with the surroundings; and with at least one spray nozzle positioned outside the air chamber and in the vicinity of the outlet opening(s) for spraying a spraying agent in the stream of air that comes out of the air chamber, whereby a section of the air chamber extends freely and in a substantially vertical direction.

Such a device is known from publication US-B1-6302332 (D1). The air chamber comprises a horizontal duct (37) located over a plant (9) and vertically distal thereof a manifold section (38) of the duct (37). The manifold section (38) extends from its top end at the distal end of the horizontal duct (37) to its bottom end in the direction of and near the ground opposite the vegetation. The spraying system of this preferred device thus comprises a boom extending adjacent to said manifold section and it is capable of bending such that said manifold section and said boom are both capable of deflection upon encountering an obstacle. The device is further provided with means for rotating the manifold section in a horizontal plane with respect to the overhead duct for selectively adjusting the orientation of the outlets and nozzles encompassed within the manifold section.

D1 further discloses in column 9, at lines 20-28 an embodiment of a device for spraying crops, which is not the preferred embodiment according to the teachings of D1, wherein the airflow-generating means may comprise hydraulically or electrically actuated air blower means arranged along the vertical boom and held up and suspended on the other side of the plants, i.e. above the plants. The preferred embodiment of D1 is disclosed in this passage as being provided with blower means, e.g. the fan impeller 30, mounted on the frame of the spray apparatus A and with air-guiding ducts extending from the frame along the boom to provide a lighter boom which reduces stress on hinges and on the frame when encountering bumps during operation. The less preferred embodiment of D1 mentioned in this passage is thus not provided with an air-guiding duct 37 extending from the fan impeller 30 mounted on the frame towards the vertical duct section 38, as the fan impeller is held up and suspended on the boom 14 at the other side of the plants 9 to generate air flow to the vertical duct section 38. This less preferred embodiment of D1 therefore discloses a device for spraying crops wherein the air chamber in its entirety is extending freely from the boom 14 in a vertical direction.

In a spraying device known from further prior art, use is made of a driveable frame that can be pulled forward by a tractor and which is provided with a reservoir for spraying agent, whereby the reservoir is coupled to two collapsible, elongate spray booms that can be folded out on either side of the frame whereby the spray booms extend in a plane substantially perpendicular to the direction of travel of the frame. Air-generating means which extend along the length of the spray booms are also provided for on the frame. On each spray boom there is a row of spray nozzles which also extend along the length of the spray boom. There are air conduits formed on the spray booms, the conduits consisting of an elongate, doubled-up air-tight strip of canvas whereby the longitudinal edges of the strips of canvas point towards the ground to form an inflatable trunk which is fixed to the spray boom through elongate, horizontally oriented, perforated drains that are also mounted on the spray boom. When in use, a central air source feeds air to air conduits formed on the spray booms, the air conduits being on either side of the central air source. This device is characterized in that the air-generating means are sub-divided in a number of sub-sections along the length of the spray booms, whereby each sub-section has a set of separate air-outlet openings so that specific patterns of distribution of air can be created.

A disadvantage of the known device is that it is quite large so that when in use it is difficult to manoeuvre with it. The spray booms extend like wings on either side of the frame whereby the total breadth of the folded-out frame ranges from 10m to 30m. When turning the device the spray booms can, of course, first be folded upwards before making the turning manoeuvre; this action, however, takes time.

Another disadvantage of the known device relates to the sensitivity of the device in regard of the wind when the spray booms have been folded out and lowered. The wind can change direction very quickly and the device is susceptible to instability because of its large frontal area.

It is an aim of the present invention to provide a device of the said type which during use thereof is as stable as possible.

It is another aim of the present invention to provide a device of the said type which during use thereof is easily manoeuvrable.

It is yet another aim of the present invention to provide a device of the said type which during use thereof is as little as possible sensitive to changing weather conditions.

It is yet further another aim of the present invention to provide a device of the said type which during use thereof is labour-saving.

It is yet further an aim of the present invention to provide a device of the said type which during use thereof is energy-saving.

It is yet further another aim of the invention to provide a device of the said type which has a simple and compact construction.

According to the invention one or more of the stated aims are achieved with a device for spraying crops as defined in claim 1, comprising: a frame (1) provided with at least one inflatable air chamber (7, 8, 9) which is provided with a number of outlet openings (16,17) that extend substantially parallel to the longitudinal direction of the air chamber, and with at least one source of air (11) connected to the air chamber for creating an over pressure in the air chamber in comparison with the surroundings; and with at least one spray nozzle positioned outside the air chamber and in the vicinity of the outlet opening(s) for spraying a spraying agent in the stream of air that comes out of the air chamber, whereby a section of the air chamber extends freely and in a substantially vertical direction, characterized in that the whole air chamber extends freely and in a substantially vertical direction and the air chamber (7, 8, 9) is provided with a roll-up mechanism.

As the air chamber extends freely and in a substantially vertical direction, it forms a free-hanging and flexible trunk intended for air that is under pressure.

As a result of these measures the device according to the present invention is more compact than the known device. Through these, an assembly of a tractor, a reservoir for spraying agent and the device according to the present invention is more stable than with the known device. By this, the assembly is more easily manoeuvrable than with the known device. By this, the chance of damage by driving is smaller than when using the known device. Furthermore, it is the case that because the air chamber is filled only with air and it therefore is light and it hangs freely, if there is a collision, then the air chamber can be easily pulled free and after being pulled free it can easily and on its own return to hang in its state of use and that any possible damage will only be slight.

Because the device is driveable in a horizontal direction and the air chamber and the outlet openings extend in substantially a vertical direction, this offers the possibility of driving the device through orchards or plantations and thereby spraying the crops right up to the height of the air chamber.

Preferably, the air chamber forms a substantially linear conduit for the air stream that is to be blown into the air chamber by the source of air, such as a ventilator, in its operating state.

The advantage of this measure is that because the air flows into the air chamber mainly without any change of direction, less loss of flow occurs in comparison with the known device.

Preferably, the air-intake side of the air source is a side of the air chamber that faces away from the ground surface.

The advantage of this measure is that when in use no leaves or grit and such like are sucked in so that the air that is blown out is cleaner and the air source can work more economically and more quietly in comparison with the known device.

According to the invention the air chamber is provided with a roll-up mechanism.

The advantage of this measure is that during use the air chamber can reach right down to the ground but thereby not drag over the ground, which enhances both the manoeuvrability of the device as well as the length of economic usefulness. Moreover, the filling of the air chamber at the start of the use of the device can take place in a controlled manner.

It will be clear to the skilled person that there are many variations of rolling up the air chamber, such as folding it up or swinging it up, which he can apply to the device according to the present invention without the exercise of any further inventive skill.

According to a further embodiment, the outlet openings are gap-shaped.

The advantage of this measure is that a good distribution of the air stream is obtained by which a good spray nebula is obtained and the chance of so-called "spray drift" is small.

According to another further preferred embodiment, the gap-shaped outlet opening extends over nearly the whole length of the air chamber.

The advantage of this measure is that it allows also high crops in orchards or plantations to be sprayed efficiently.

According to another further preferred embodiment, the frame, on which the air chamber is mounted mainly vertically, is adjustable in height.

Some advantages of this measure are that crops of different heights can be easily sprayed, that when the device is being driven the air chamber does not drag across the ground surface, and that the manoeuvrability of an assembly of a tractor, a reservoir for spraying agent and the device is high.

According to another preferred embodiment, the device comprises two or more air chambers.

In this configuration, it is possible to spray two or more rows of crops simultaneously.

According to another further preferred embodiment, each air chamber is provided with its own air source.

The advantage of this measure is that each air chamber is provided with a small ventilator, this being energy-efficient. Furthermore, the construction of the device can be compact and light, which contributes toward the driving-stability of the system.

According to another aspect of the invention, the frame of the device is provided with a number of articulated parts on which the air chambers are mounted.

The advantage of this measure is that during manoeuvring the various air chambers at the ends of the frame can be kept close to the vehicle that pulls the device forward and that these can be slid out, or preferably folded out on hinges, during spraying.

The invention will be elaborated on by means of a number of examples of embodiments of the spraying device according to the invention and with reference to the accompanying drawings.

In the drawings:

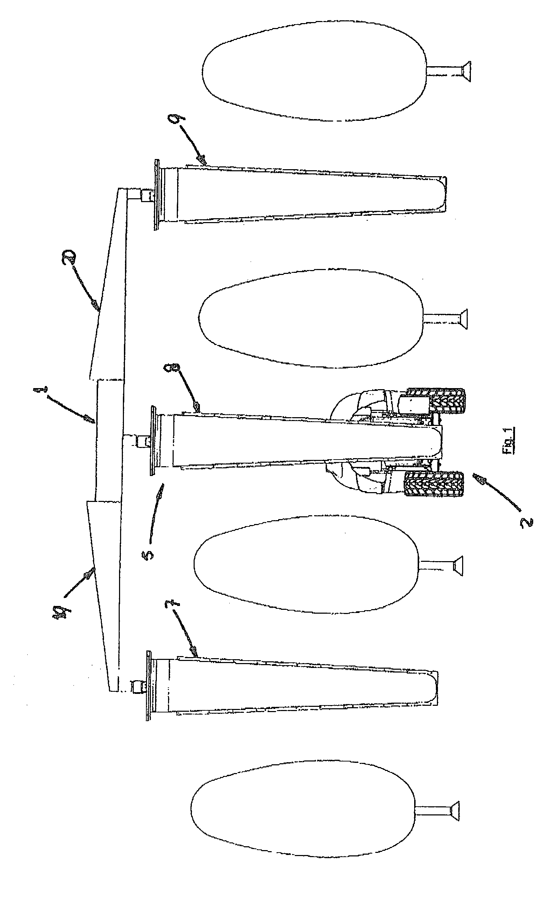

Figure 1 is a rear view of an operating state of the spraying device according to the invention;
Figure 2 is a side view of an operating state of the spraying device according to the invention;

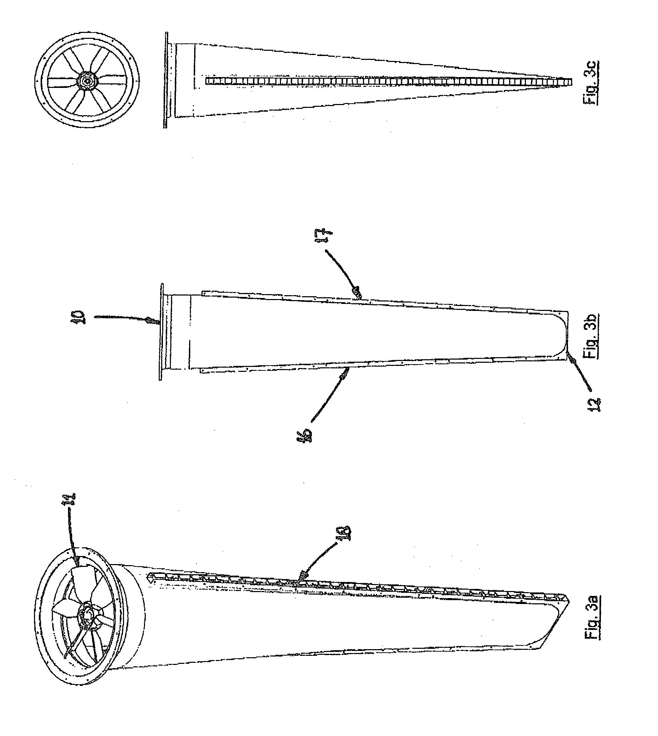

Figures 3a-c are perspective views of an air chamber of the spraying device according to the invention; and

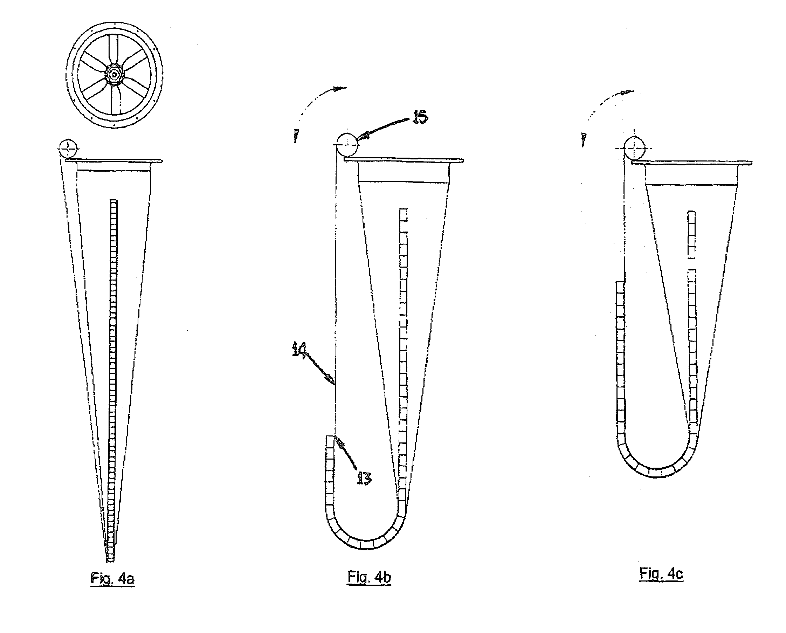

Figures 4a-c are side views of the air chamber and the related roll-up mechanism during some resting and operating states of the spraying device according to the invention.

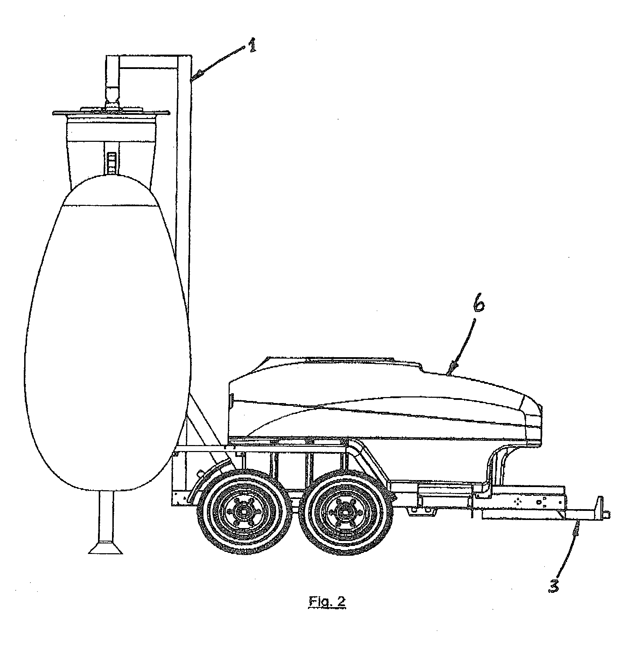

The spraying device according to the present invention is mounted on a frame 1 that forms a part of a carriage 2. This carriage 2, as shown in Figure 2, is provided with a hitch shaft 3, with which it can be attached to a tractor 4.

The spraying device proper 5 is therefore attached to the rear part of frame 1. Further, there is a reservoir 6 for spraying agent connected to frame 1. Incidentally, it is also possible to locate the spraying device in front of reservoir 6 in the direction of travel.

In the present example of an embodiment, the spraying device proper is formed by three air chambers 7, 8 and 9. The air chambers 7, 8 and 9 are elongate. In this example, they are vertically suspended air bags whereby the bags taper over their length in the direction of the ground surface. An air bag can, of course, also be cylindrical or have another shape. In the shown example of an embodiment, the top end of the air chamber is open and the bottom end is closed. At its top end 10, the air chamber is connected to a ventilator 11 by means of a connecting member (not shown). At its bottom end 12, the air chamber is provided with an eye 13 and a cable 14 that are part of a roll-up mechanism 15.

In this case, the circumambulating wall of the air chamber displays outlet openings 16, 17 on opposite sides. These outlet openings are present over nearly the whole length of the air chamber. In each of the outlet openings 16,17 small plates 18 are provided which serve, on the one hand, as spacers, and on the other hand, as guiding baffles for guiding the air stream in order to ensure that the air stream flows out at a slight angle directed upward with respect to the horizontal direction. This can be achieved by placing the small plates 18 at an angle of, for example, 15 degrees with respect to the horizontal direction. The small plates 18 are attached by means of pop rivets and/or spot welds and/or bolts and screws.

It will be clear that it is possible to provide for a greater or lesser number of openings in the air chamber; this depends on the length of the air chambers, on the power of the ventilator and on other parameters.

It will also be clear that there are alternatives to the use of ventilators, such as the use of a source of compressed air, etc.

For driving the ventilator(s) and other energy-using means (the reservoir for spraying agent, the roll-up mechanism, etc.), use is made of a gear box, placed on the frame and not shown in the drawing, that is driven by a motor, that is also not shown, and which is connected by means of a shaft to a transmission box. Other powering constructions can be applied here too.

The ventilators are driven through rotation of the motor that is not depicted in the drawings.

A row of spray nozzles are provided in the vicinity of a number of the outlet openings 16,17 for spraying the spraying agent that is to be carried by the air that comes out of the air chamber(s). The spray nozzles are not depicted in the drawing. These spray nozzles are each attached to a line (not depicted) which is attached along the wall of the air chamber and which is connected to a liquid pump (not depicted) for pumping the liquid.

As a result of these measures, the spray nozzles spray the liquid fed through by the related pump, whereby the thus resulting nebula (not depicted) is carried by the air stream that comes out of the air-outlet openings.

Finally, it is possible to roll up the air chambers when manoeuvring the device according to the present invention so that they do not drag across the ground surface. It is also possible to hinge the air chambers 7, 8 and 9 which are at the ends of frame 1 and are suspended from the articulated parts 19, 20 of frame 1, in such a way that these can come to hang behind the forward-pulling vehicle so that the total breadth of the assembly of the forward-pulling vehicle, the reservoir of spraying agent and the frame according to the invention is kept as small as possible. It will be clear that frame 1 can be modified without the exercise of further inventive skill to provide the device according to the invention with a single, two, three or more air chambers.

## Claims

1. Device for spraying crops, comprising: a frame (1) provided with at least one inflatable air chamber (7, 8, 9) which is provided with a number of outlet openings (16,17) that extend substantially parallel to the longitudinal direction of the air chamber, and with at least one source of air (11) connected to the air chamber for creating an over pressure in the air chamber in comparison with the surroundings; and with at least one spray nozzle positioned outside the air chamber and in the vicinity of the outlet opening(s) for spraying a spraying agent in the stream of air that comes out of the air chamber, whereby a section of the air chamber extends freely and in a substantially vertical direction, **characterized in that** the whole air chamber extends freely and in a substantially vertical direction and the air chamber (7, 8, 9) is provided with a roll-up mechanism.

2. Spraying device according to claim 1, **characterized in that** the air chamber (7, 8, 9) forms a substantially linear conduit for the air stream that is to be blown into the air chamber by the source of air (11) in its operating state.

3. Spraying device according to any of claims 1-2, **characterized in that** the air-intake side of the air source (11) is a side of the air chamber (7, 8, 9) that faces away from the ground surface.

4. Spraying device according to any of claims 1-3, **characterized in that** the air chamber (7, 8, 9) is provided with a fold or swing point.

5. Spraying device according to any of claims 1-4, **characterized in that** the outlet opening (16, 17) of the air chamber (7, 8, 9) is gap-shaped.

6. Spraying device according to claim 5, **characterized in that** the gap-shaped outlet opening (16,17) extends over nearly the whole length of the air chamber.

7. Spraying device according to any of claims 1-6, **characterized in that** the frame (1) on which the air chamber (7, 8, 9) is mounted mainly vertically, is adjustable in height.

8. Spraying device according to any of claims 1-7, **characterized in that** the device comprises two or more air chambers (7, 8, 9).

9. Spraying device according to claim 8, **characterized in that** each air chamber (7, 8, 9) is provided with its own air source (11).

10. Spraying device according to any of claims 7-8, **characterized in that** the frame (1) is provided with a number of articulated parts (19, 20) on which the air chambers (7, 8, 9) are mounted.

11. Spraying device according to claim 10, **characterized in that** the articulated parts (19, 20) are hinge-ingly connected to the middle section of the frame (1).

12. Device according to any preceding claim, **characterized in that** the device is coupled to a reservoir (6) of spraying agent which is connected through at least one spraying agent line to at least one spray nozzle positioned outside the air chamber (7, 8, 9) and in the vicinity of the outlet opening (16,17) for spraying the spraying agent in the air stream that comes out of the air chamber.

## Patentansprüche

1. Vorrichtung zum Spritzen von Kulturpflanzen, welche umfasst: einen Rahmen (1), der mit mindestens einer aufblasbaren Luftkammer (7, 8, 9), welche mit einer Anzahl von Auslassöffnungen (16, 17) versehen ist, die sich im Wesentlichen parallel zu der Längsrichtung der Luftkammer erstrecken, und mit mindestens einer mit der Luftkammer verbundenen Luftquelle (11) zum Erzeugen eines Überdrucks in der Luftkammer im Vergleich zur Umgebung versehen ist; und mit mindestens einer außerhalb der Luftkammer und in der Nähe der Auslassöffnung(en) positionierten Spritzdüse zum Spritzen eines Spritzmittels in den Luftstrom, welcher aus der Luftkammer austritt, wobei sich ein Abschnitt der Luftkammer frei und in einer im Wesentlichen vertikalen Richtung erstreckt, **dadurch gekennzeichnet, dass** sich die gesamte Luftkammer frei und in einer im Wesentlichen vertikalen Richtung erstreckt und die Luftkammer (7, 8, 9) mit einem Aufrollmechanismus versehen ist.

2. Spritzvorrichtung nach Anspruch 1, **dadurch gekennzeichnet, dass** die Luftkammer (7, 8, 9) einen im Wesentlichen geradlinigen Kanal für den Luftstrom bildet, welcher von der Luftquelle (11) in ihrem Betriebszustand in die Luftkammer geblasen werden soll.

3. Spritzvorrichtung nach einem der Ansprüche 1 - 2, **dadurch gekennzeichnet, dass** die Luftansaugseite der Luftquelle (11) eine Seite der Luftkammer (7, 8, 9) ist, welche von der Bodenoberfläche abgewandt ist.

4. Spritzvorrichtung nach einem der Ansprüche 1 - 3, **dadurch gekennzeichnet, dass** die Luftkammer (7, 8, 9) mit einem Knick- oder Schwenkpunkt versehen ist.

5. Spritzvorrichtung nach einem der Ansprüche 1 - 4, **dadurch gekennzeichnet, dass** die Auslassöffnung (16, 17) der Luftkammer (7, 8, 9) spaltförmig ist.

6. Spritzvorrichtung nach Anspruch 5, **dadurch gekennzeichnet, dass** sich die spaltförmige Auslassöffnung (16, 17) über nahezu die gesamte Länge der Luftkammer erstreckt.

7. Spritzvorrichtung nach einem der Ansprüche 1 - 6, **dadurch gekennzeichnet, dass** der Rahmen (1), an welchem die Luftkammer (7, 8, 9) in der Hauptsache vertikal angebracht ist, höhenverstellbar ist.

8. Spritzvorrichtung nach einem der Ansprüche 1 - 7, **dadurch gekennzeichnet, dass** die Vorrichtung zwei oder mehr Luftkammern (7, 8, 9) umfasst.

9. Spritzvorrichtung nach Anspruch 8, **dadurch gekennzeichnet, dass** jede Luftkammer (7, 8, 9) mit ihrer eigenen Luftquelle (11) versehen ist.

10. Spritzvorrichtung nach einem der Ansprüche 7 - 8, **dadurch gekennzeichnet, dass** der Rahmen (1) mit einer Anzahl von Gelenkteilen (19, 20) versehen ist, an welchen die Luftkammern (7, 8, 9) angebracht sind.

11. Spritzvorrichtung nach Anspruch 10, **dadurch gekennzeichnet, dass** die Gelenkteile (19, 20) gelenkig mit dem mittleren Abschnitt des Rahmens (1) verbunden sind.

12. Vorrichtung nach einem der vorhergehenden Ansprüche, **dadurch gekennzeichnet, dass** die Vorrichtung mit einem Behälter (6) für Spritzmittel gekoppelt ist, welcher über mindestens eine Spritzmittelleitung mit mindestens einer außerhalb der Luftkammer (7, 8, 9) und in der Nähe der Auslassöffnung (16, 17) positionierten Spritzdüse zum Spritzen des Spritzmittels in den Luftstrom, welcher aus der Luftkammer austritt, verbunden ist.

## Revendications

1. Dispositif de pulvérisation de cultures, comprenant un châssis (1) pourvu d'au moins une chambre à air gonflable (7, 8, 9) qui est pourvue d'un nombre d'ouvertures de sortie (16, 17) qui s'étendent substantiellement parallèlement à la direction longitudinale de la chambre à air, et avec au moins une source d'air (11) raccordée à la chambre à air pour créer une surpression dans la chambre à air en comparaison avec l'environnement ; et avec au moins une buse de pulvérisation positionnée à l'extérieur de la chambre à air et à proximité de la (des) ouverture(s) de sortie pour pulvériser un agent de pulvérisation dans le flux d'air qui ressort de la chambre à air, moyennant quoi une section de la chambre à air s'étend à découvert et dans une direction substantiellement verticale, **caractérisé en ce que** la chambre à air totale s'étend à découvert et dans une direction substantiellement verticale et la chambre à air (7, 8, 9) est pourvue d'un mécanisme d'enroulement.

2. Dispositif de pulvérisation selon la revendication 1, **caractérisé en ce que** la chambre à air (7, 8, 9) forme une conduite substantiellement linéaire pour le flux d'air à souffler dans la chambre à air par la source d'air (11) dans son état opérationnel.

3. Dispositif de pulvérisation selon une quelconque des revendications 1 - 2, **caractérisé en ce que** le côté d'admission d'air de la source d'air (11) est un côté de la chambre à air (7, 8, 9) qui se détourne de la surface du sol.

4. Dispositif de pulvérisation selon une quelconque des revendications 1 - 3, **caractérisé en ce que** la chambre à air (7, 8, 9) est pourvue d'un point de pliage ou de pivotement.

5. Dispositif de pulvérisation selon une quelconque des revendications 1 - 4, caractérisé e ce que l'ouverture de sortie (16, 17) de la chambre à air (7, 8, 9) est en forme d'interstice.

6. Dispositif de pulvérisation selon la revendication 5, dans lequel l'ouverture de sortie en forme d'interstice (16, 17) s'étend sur presque la longueur totale de la chambre à air.

7. Dispositif de pulvérisation selon une quelconque des revendications 1 - 6, **caractérisé en ce que** le châssis (1) sur lequel la chambre à air (7, 8, 9) est montée principalement verticalement est ajustable en hauteur.

8. Dispositif de pulvérisation selon une quelconque des revendications 1 - 7, **caractérisé en ce que** le dispositif comprend deux ou plus chambres à air (7, 8, 9).

9. Dispositif de pulvérisation selon la revendication 8, **caractérisé en ce que** chaque chambre à air (7, 8, 9) est pourvue de sa propre source d'air (11).

10. Dispositif de pulvérisation selon une quelconque des revendications 7 - 8, **caractérisé en ce que** le châssis (1) est pourvu d'un nombre de parties articulées (19, 20) sur lesquelles les chambres à air (7, 8, 9) sont montées.

11. Dispositif de pulvérisation selon la revendication 10, **caractérisé en ce que** les parties articulées (19, 20) sont raccordées par charnière à la section centrale du châssis (1).

12. Dispositif selon une quelconque des revendications précédentes, **caractérisé en ce que** le dispositif est couplé à un réservoir (6) d'agent de pulvérisation qui est raccordé par l'intermédiaire d'au moins une ligne d'agent de pulvérisation à au moins une buse de pulvérisation positionnée à l'extérieur de la chambre à air (7, 8, 9) et à proximité de l'ouverture de sortie (16, 17) pour pulvériser l'agent de pulvérisation dans le flux d'air qui ressort de la chambre à air.
